# EUROPÄISCHE PATENTSCHRIFT

(11) **EP 0 312 951 B1**
(45) Veröffentlichungstag und Bekanntmachung des Hinweises auf die Patenterteilung: **01.06.1994**
(21) Anmeldenummer: 88117225.8
(22) Anmeldetag: 17.10.1988
(51) Int. Cl.: B23B 31/02

(54) **Spannvorrichtung**
Clamping device
Dispositif de serrage

(30) Priorität: 17.10.1987 DE 8715181 U
(43) Veröffentlichungstag der Anmeldung: 26.04.1989
(73) Patentinhaber: Ledermann GmbH, 72160 Horb (DE)
(72) Erfinder: Friesinger, Julius, D-7240 Horb-Dettingen (DE); Katz, Otto, D-7240 Horb-Bildechingen (DE)
(74) Vertreter: Ott, Elmar, Dipl.-Ing.

(56) Entgegenhaltungen:
- DE-B- 1 221 528
- DE-C- 835 100
- DE-U- 7 131 738
- DE-U- 7 341 015
- DE-U- 7 516 895
- DE-U- 8 518 206
- DE-U- 8 715 181
- US-A- 2 337 402
- US-A- 2 350 565
- US-A- 2 395 534
- US-A- 3 613 192

## Beschreibung

Die Erfindung betrifft eine Spannvorrichtung gemäß der Gattung des Hauptanspruchs.

Zum Spannen von Schaftwerkzeugen, wie Bohrer, Fräser oder dergleichen, sind verschiedene Spannvorrichtungen bekannt. Bei mechanischen Spannvorrichtungen wird die Spannkraft in der Regel durch Klemmschrauben, Spannzange oder mittels einer Überwurfmutter bei Kegelschaftaufnahmen aufgebracht. Des weiteren sind Dehnspannvorrichtungen bekannt, bei denen die Spannkraft durch ein Druckmedium aufgebracht wird.

Die bekannten Spannvorrichtungen erfordern lange Rüstzeiten, die insbesondere bei Maschinen mit mehreren Maschinenspindeln beim Werkzeugwechsel zu großen Stillstandzeiten führen. Derartige Maschinen werden beispielsweise in der Möbelindustrie zur Herstellung von Abstandsbohrungen verwendet, in die beispielsweise später Auflageelemente für in der Höhe verstellbare Zwischenböden einsetzbar sind.

Aus der US-PS 2,395,534 ist eine Spannvorrichtung bekannt, die das untere Kupplungsteil in einem oberen Kupplungsteil mittels seitlich angreifenden Sicherungsstiften gegen axiales Herausrutschen sichert. Das untere Kupplungsteil sitzt dabei selbstklemmend in einer konischen Aufnahme.

Aus dem DE-GM 73 41 015 ist ein Halter für rotierende Werkzeuge bekannt, der eine Art Bajonettverschluß besitzt. Das eine Kupplungsteil greift mit einem Konus in eine entsprechend ausgebildete konische Buchse des anderen Kupplungsteils selbstklemmend ein. Der Betrieb ist nur in einer Drehrichtung möglich.

Aus der US-A-3 613 192 ist eine Spannvorrichtung mit einer Aufnahme für den Schaft eines Schaftwerkzeuges bekannt, die über eine Kupplungseinrichtung an einer Maschinenspindel befestigt werden kann. Die Kupplungseinrichtung besitzt eine konische Axialbohrung sowie ein in die Axialbohrung einsetzbares Kupplungsteil mit entsprechend ausgebildeter konischer Mantelfläche. Die konische Mantelfläche des Kupplungsteils wird mittels Federkraft in der konischen Axialbohrung verspannt.

Der Erfindung liegt die Aufgabe zugrunde, eine Spannvorrichtung mit einer Aufnahme für Schaftwerkzeuge zu schaffen, die einen schnellen Werkzeugwechsel an den Maschinenspindeln zuläßt und außerdem gute Rundlaufeigenschaften aufweist.

Die Lösung dieser Aufgabe wird durch die im Hauptanspruch angegebenen Merkmale erhalten. Die Spannvorrichtung besitzt eine Aufnahme für ein Schaftwerkzeug und andererseits eine Kupplungseinrichtung, die aus zwei Kupplungsteilen bestehen, von denen das eine einen Innenkonus und das andere einen entsprechenden Außenkonus aufweist. Der Außenkonus wird von einem Kegelstumpf gebildet, der Aussparungen aufweisen kann, die mit einem Rastelement des anderen Kupplungsteils eine lösbare Arretiereinrichtung bilden. Die Arretiereinrichtung wird durch einen Querstift, der axial federnd gelagert ist, und eine bajonettverschlußartige Aussparung am Kegelstumpf des anderen Kupplungsteils gebildet. Die Verbindung beider Kupplungsteile kann damit sehr einfach dadurch erfolgen, daß der Kegelstumpf in die konische Bohrung des anderen Kupplungsteils axial eingeschoben und verdreht wird. Dabei wird der Querstift aus seiner Ruheposition gegen eine Federkraft axial verschoben und rastet in eine Ausbuchtung des Bajonettverschlusses ein. Die am Querstift angreifende Federkraft zieht den Kegelstumpf in die Axialbohrung wodurch eine kraftschlüssige Verbindung entsteht. Gleichzeitig bildet die Ausbuchtung in Verbindung mit dem darin gehaltenen Querstift eine Drehsicherung.

Ein Werkzeugwechsel kann derart erfolgen, daß ein abgenutztes Werkzeug durch kurze Drehung am ersten Kupplungsteil, an dem auch die Aufnahme für das Werkzeug ausgebildet ist, vom zweiten Kupplungsteil gelöst wird. Ein neues Schaftwerkzeug, welches bereits zuvor in die Aufnahme eines separaten Kupplungsteils eingesetzt worden ist, kann in umgekehrter Weise auf das mit der Maschinenspindel verbundene zweite Kupplungsteil aufgesteckt und durch kurze Drehung arretiert werden.

Der Querstift ist in Langlöchern in der Wandung des ersten Kupplungsteils gelagert sein und kann mittels Federkraft über einen Haltebolzen axial nach innen gezogen werden.

Die in der bajonettverschlußartigen Aussparung vorgesehene Ausbuchtung, die als Drehsicherung dient, besitzt einen Radius, der dem Radius des Querstifts entspricht. Dadurch wird eine spielfreie Positionierung erreicht.

Der Querstift kann mittels eines Federpakets oder mittels einem aus elastischem Material bestehenden Druckstück gegen einen Anschlag gezogen werden. Es besteht auch die Möglichkeit, den Querstift selbst aus elastischem oder federndem Material herzustellen und/oder ihn in elastischen Lagerelementen in den Langlöchern der Wandung des Kupplungsteils zu lagern.

Der Querstift kann auch starr angeordnet sein, wobei in diesem Fall die am Querstift angreifenden Aussparungen des anderen Kupplungsteils gegen eine Federkraft axialverschiebbar angeordnet sein können.

Als Drehsicherungen können außer am Querstift angreifenden Ausbuchtungen auch herkömmliche Rastbolzen dienen, die in Rastöffnungen am gegenüberliegenden Teil eingreifen. Es kann auch ein elastisches Klemmstück in einem der Kupplungsteile angeordnet sein, gegen das das andere Kupplungsteil drückt. Zwischen Klemmstück und dem anliegenden Kupplungsteil wirkt Klemm- oder Reibfläche als Drehsicherung.

Um ein exaktes Positionieren der in die Aufnahme einzusetzenden Schaftwerkzeuge ermöglichen zu können, ist ein definierter Anschlag in der Aufnahme vorgesehen, an dem das jeweils eingesetzte Schaftwerkzeug mit einem am Schaftende einstellbaren Anschlagelement anliegt.

Vorteilhafte Weiterbildungen der Erfindung sind in den Unteransprüchen gekennzeichnet.

Die Erfindung wird nachfolgend anhand der Zeichnungen näher erläutert. Es zeigen:
Figur 1 ein erstes Ausführungsbeispiel einer Spannvorrichtung im montierten Zustand,
Figur 2 die in Figur 1 dargestellte Spannvorrichtung im demontierten Zustand,
Figur 3 ein weiteres Ausführungsbeispiel mit einem elastischen Druckstück als Federelement,
Figur 4 eine weitere Ausführung mit einem federnd gelagerten Rastbolzen als Drehsicherung,
Figur 5 ein weiteres Ausführungsbeispiel einer Spannvorrichtung mit starr angeordnetem Querstift,
Figur 6 eine Spannvorrichtung mit elastisch gelagertem Querstift,
Figur 7 und Figur 8 weitere Ausführungsformen mit unterschiedlichen Lagerflächen der Kupplungsteile.

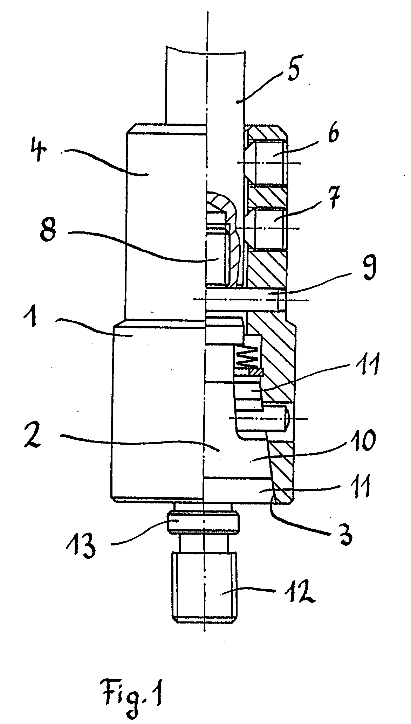

Die in Figur 1 dargestellte Spannvorrichtung besteht aus einem ersten Kupplungsteil 1 und einem zweiten Kupplungsteil, welches in eine Axialbohrung 3 des ersten Kupplungsteils 1 eingesetzt ist. Das erste Kupplungsteil 1 besitzt an seinem oberen Ende eine Aufnahme 4, in die der Schaft 5 eines Schaftwerkzeugs mittels Spannschrauben 6, 7 eingespannt ist. Der Schaft 5 liegt mit einem verstellbaren Anschlagelement 8 an einem Anschlagstift 9 an.

Das zweite Kupplungsteil 2 besitzt einen Kegelstumpf 10 mit konischer Mantelfläche 11, die an der entsprechend konisch ausgebildeten Axialbohrung 3 anliegt. Zur Befestigung des Kupplungsteils 2 an einer hier nicht dargestellten Maschinenspindel, besitzt dieses ein Gewinde 12 und einen Zentrieransatz 13.

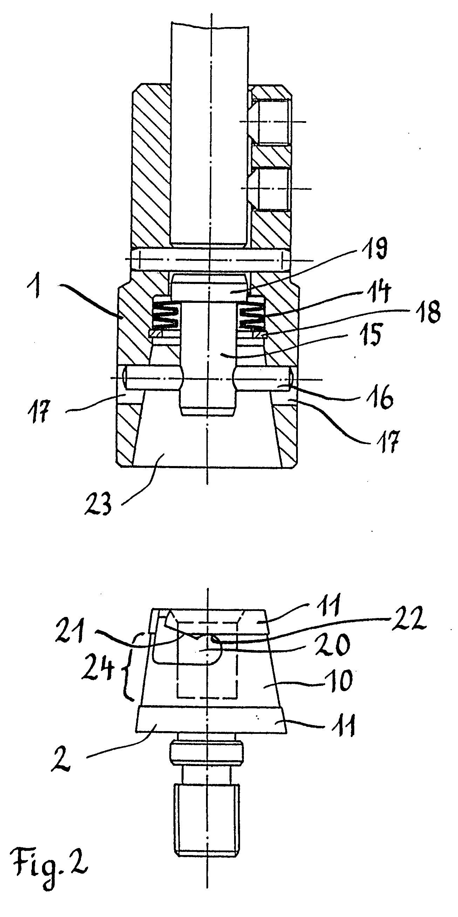

Weitere Einzelheiten des Spannelements sind anhand von Figur 2 näher erläutert.

Im Kupplungsteil 1 befindet sich ein axial gegen ein Federelement 14 verschiebbarer Haltebolzen 15 an dem ein Querstift 16 als Rastelement befestigt ist. Mit seinen Enden greift der Querstift 16 in Langlöcher 17 der Wandung des Kupplungsteils 1 ein. Das Federelement 14, welches als Federpaket ausgebildet sein kann, stützt sich an einem Anschlag 18 ab und drückt gegen den überstehenden Bolzenkopf 19. Damit wird der Querstift 16 in der hier dargestellten Ruhestellung unter Vorspannung gehalten. Das Klemmteil 2 besitzt eine bajonettverschlußartige Aussparung 20, die in Verbindung mit dem Querstift 16 eine Arretiereinrichtung bildet.

Das Kupplungsteil 2 kann in die Axialbohrung 3 eingesetzt und verdreht werden, wobei der Querstift 16 entlang der Schräge 21 nach unten gezogen wird, bis er in der Ausbuchtung 22 einrastet. Der Kegelstumpf 10 wird dadurch mit der am Querstift 16 angreifenden Federkraft in die Axialbohrung 3 hineingezogen und mit seiner konischen Mantelfläche 11 gegen die konische Innenfläche 23 der Axialbohrung 3 gepreßt.

Die konische Mantelfläche 11 verläuft nicht gleichmäßig über den gesamten Kegelstumpf 10, sondern ist durch einen breiten Absatz 24 unterbrochen. Durch diese Maßnahme wird eine besonders exakte Positionierung und ein entsprechend exakter Rundlauf erhalten.

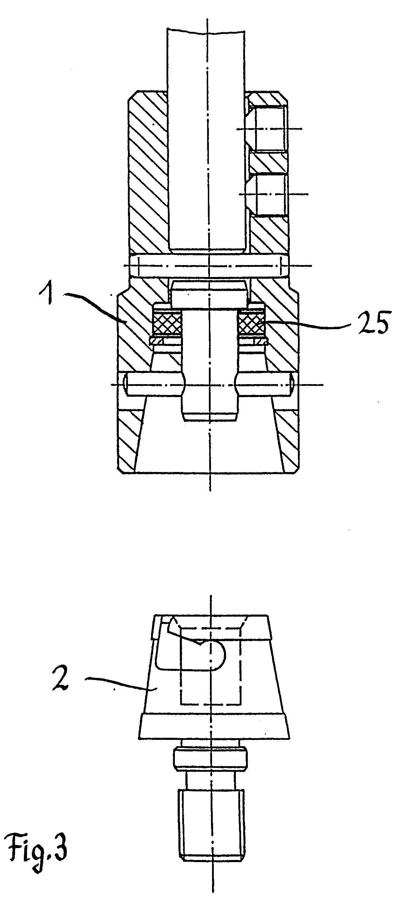

Bei der in Figur 3 dargestellten Spannvorrichtung ist anstelle eines als Federpaket ausgebildeten Federelementes ein elastisches Druckstück 25 aus Gummi oder dergleichen Material vorgesehen. Im übrigen unterscheidet sich die Spannvorrichtung von Figur 3 nicht von der gemäß Figur 2.

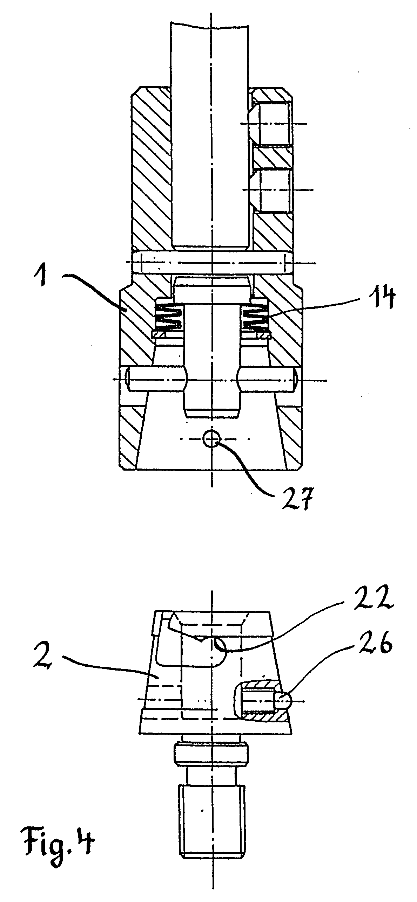

Die Spannvorrichtung gemäß Figur 4 besitzt an ihrem mit einer Maschinenspindel verbindbaren Kupplungsteil 2 als Drehsicherung einen federnden Rastbolzen 26, der am Kupplungsteil 1 in eine entsprechende Öffnung 27 beim zusammensetzen beider Teile 1, 2 einrastet. Die Ausbuchtung 22 könnte somit in diesem Fall auch entfallen und durch einen waagerecht verlaufenden Aussparungsrand ersetzt werden.

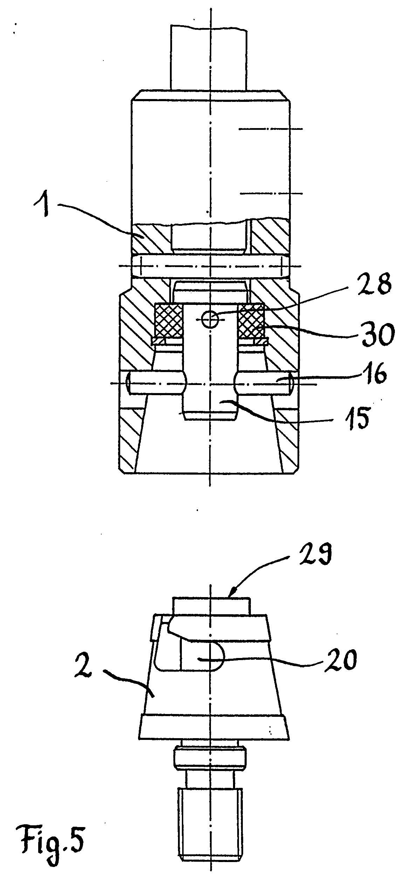

In Figur 5 ist eine Spannvorrichtung gezeigt, bei der der Haltebolzen 15 starr mittels eines Fixierstiftes 28 mit dem Kupplungsteil 1 verbunden ist. Das Kupplungsteil 2 drückt mit einer überstehenden Anlagefläche 29 beim Einsetzen in das Kupplungsteil 1 gegen ein elastisches Klemmstück 30. Aufgrund der Reibung zwischen der Fläche 29 und dem Klemmstück 30 wird das Kupplungsteil 2 hinreichend drehfest im Kupplungsteil 1 gehalten. Die Aussparung 20 besitzt in diesem Fall keine Ausbuchtung 22, wie sie beispielsweise bei Spannvorrichtung gemäß Figur 2 vorhanden ist.

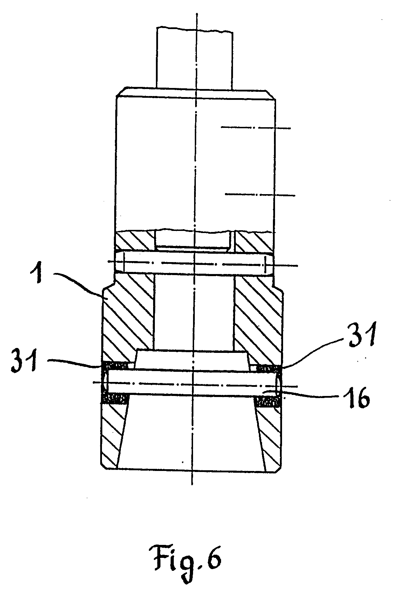

In Figur 6 ist nur das Kupplungsteil 1 dargestellt, bei dem der Querstift 16 in elastischen Lagerelementen 31 gelagert ist. Die Lagerelemente 31 erlauben ein federndes, axiales Auslenken des Querstiftes 16, so daß hier beispielsweise das Kupplungsteil 2 gemäß Figur 2 Verwendung finden kann.

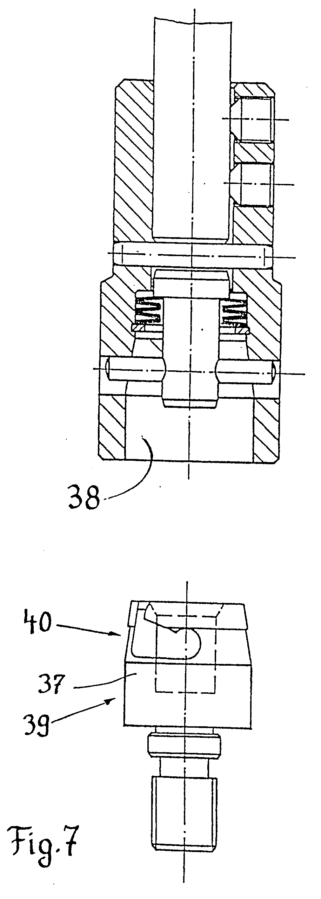

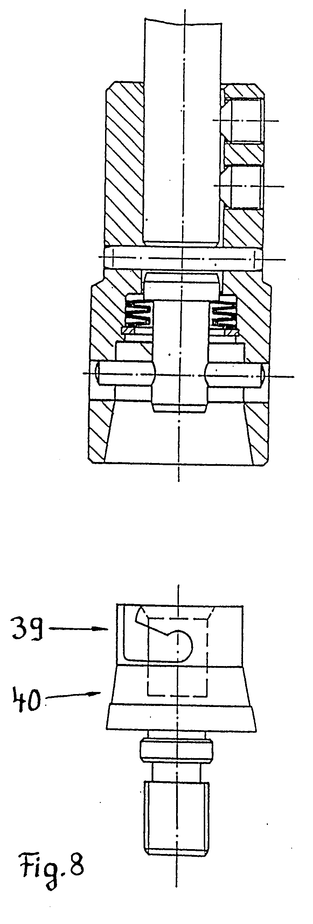

In den Figuren 7 und 8 sind zwei weitere Ausführungsformen von Spannvorrichtungen gezeigt, wobei die Mantelfläche 37 und die entsprechende Innenfläche 38 der Axialbohrung in einen zylindrischen Bereich 39 und einen konischen Bereich 40 unterteilt ist. Im übrigen entsprechen die Spannvorrichtungen gemäß Figur 8 und Figur 8 der Ausführung gemäß Figur 1 und Figur 2.

## Patentansprüche

1. Spannvorrichtung mit einer Aufnahme (4) für den Schaft (5) eines Schaftwerkzeugs und mit einem an einer Maschinenspindel oder dergleichen befestigbaren Kupplungseinrichtung, die aus einem ersten Kupplungsteil (1) mit konischer Axialbohrung (3) und einem in die konische Axialbohrung (3) einsetzbaren zweiten Kupplungsteil (2) mit einer entsprechend konisch ausgebildeten Mantelfläche (11) besteht und eine lösbare Arretiervorrichtung besitzt, wobei die Arretiervorrichtung die beiden Kupplungsteile (1, 2) kraftschlüssig zur Drehmomentübertragung verspannt und die konische Mantelfläche (11) des zweiten Kupplungsteils (2) ständig mittels der Federkraft eines axial federnd gelagerten Rastelements (16) gegen die konische Axialbohrung (3) des ersten Kupplungsteils (1) gedrückt wird, **dadurch gekennzeichnet**, daß als Rastelement ein die konische Axialbohrung (3) quer durchsetzender Querstift (16) mit seinen Enden in an der Wandung des ersten Kupplungsteils (1) vorgesehenen Langlöcher (17) eingreift, daß der Querstift (16) axial vorgespannt ist und das andere Kupplungsteil (2) im Bereich seiner konischen Mantelfläche (11) bajonettverschlußartige Aussparungen (20) hat, in die der Querstift (16) federnd eingreift.

2. Spannvorrichtung nach Anspruch 1, **dadurch gekennzeichnet**, daß die Arretiereinrichtung eine Formschlußsicherung gegen Verdrehen der beiden Kupplungsteile (1, 2) besitzt.

3. Spannvorrichtung nach einem der vorhergehenden Ansprüche, **dadurch gekennzeichnet**, daß die Aussparung (20) eine axial ausgerichtete Ausbuchtung (22) mit einem dem Radius des Querstiftes (16) entsprechenden Radius als Drehsicherung hat.

4. Spannvorrichtung nach einem der vorhergehenden Ansprüche, **dadurch gekennzeichnet**, daß der Querstift (16) an einem in das Innere der konischen Axialbohrung (3) weisenden, axial beweglichen Haltebolzen (15) befestigt ist, und daß am Haltebolzen (15) ein Federelement (14) angreift, welches an einem Anschlag (18) in den ersten Kupplungsteil (1) abgestützt ist.

5. Spannvorrichtung nach Anspruch 4, **dadurch gekennzeichnet**, daß das Federelement (14) ein Federpaket oder ein aus elastischem Material bestehendes Druckstück (25) ist.

6. Spannvorrichtung nach einem der vorhergehenden Ansprüche, **dadurch gekennzeichnet**, daß am verjüngten Ende des zweiten Kupplungsteils (2) eine axial federnde Hülse (34) übersteht, an der Aussparungen (20) für die Arretierung ausgebildet sind.

7. Spannvorrichtung nach einem der Ansprüche 1 oder 3, **dadurch gekennzeichnet**, daß der Querstift (16) an seinen Enden in elastischen Lagerelementen (31) gelagert ist.

8. Spannvorrichtung nach einem der vorhergehenden Ansprüche, **dadurch gekennzeichnet**, daß der Querstift (16) aus elastischem oder federndem Material besteht.

9. Spannvorrichtung nach einem der vorhergehenden Ansprüche, **dadurch gekennzeichnet**, daß als Drehsicherung ein in eine Rastöffnung (27) eingreifender Rastbolzen (26) an einem der Kupplungsteile (1; 2) angebracht ist.

10. Spannvorrichtung nach einem der Ansprüche 1 bis 8, **dadurch gekennzeichnet**, daß als Drehsicherung ein elastisches Klemmstück (30) im ersten Kupplungsteil (1) vorgesehen ist, welches mit einer Klemm- oder Reibfläche gegen eine stirnseitige Fläche (29) des zweiten Kupplungsteils (2) drückt.

11. Spannvorrichtung nach einem der vorhergehenden Ansprüche, **dadurch gekennzeichnet**, daß am ersten Kupplungsteil (1) die Aufnahme (4) für ein Schaftwerkzeug vorgesehen ist, und daß das zweite Kupplungsteil (2) einen Gewindestift (12) oder ein anderes Befestigungselement besitzt, mit dem das zweite Kupplunsteil (2) an einer Maschinenspindel oder dergleichen befestigbar ist.

12. Spannvorrichtung nach einem der vorhergehenden Ansprüche, **dadurch gekennzeichnet**, daß die Aufnahme (4) einen Anschlag (9) hat, an dem das mit einem verstellbaren Anschlagelement (8) versehene Schaftende des Schaftwerkzeugs anliegt.

## Claims

1. Clamping device with a receptacle (4) for the shank (5) of a shank tool and with a coupling device fixable to a machine spindle or the like and comprising a first coupling part (1) with a conical axial bore (3) and a second coupling part (2) with a correspondingly conically constructed circumferential surface (11) insertable in the conical axial bore (3) and having a detachable arresting device, the arresting device frictionally bracing the two coupling parts (1, 2) for torque transmission purposes and the conical circumferential surface (11) of the second coupling part (2) is constantly pressed by spring tension of an axially resiliently mounted locking element (16) against the conical axial bore (3) of the first coupling part (1), characterized in that the locking element is constituted by a transverse pin (16) transversely passing through the conical axial bore (3) and its ends engage in elongated holes (17) provided on the wall of the first coupling part (1), that the transverse pin (16) is axially pretensioned and that the other coupling part (2) has bayonet catch-like recesses (20) in the vicinity of its conical circumferential surface (11) in which resiliently engages the transverse pin (16).

2. Clamping device according to claim 1, characterized in that the arresting device has a self-closure prevention against the rotation of the two coupling parts (1, 2).

3. Clamping device according to one of the preceding claims, characterized in that the recess (20) has an axially directed convexity (22) with a radius corresponding to the radius of the transverse pin (16) as a rotation preventing means.

4. Clamping device according to one of the preceding claims, characterized in that the transverse pin (16) is fixed to an axially movable retaining bolt (15) directed into the interior of the conical axial bore (3) and that on the retaining bolt (15) engages a spring element (14), which is supported on a stop (18) in the first coupling part (1).

5. Clamping device according to claim 4, characterized in that the spring element (14) is a spring assembly or a pressure piece (25) made from an elastic material.

6. Clamping device according to one of the preceding claims, characterized in that over the tapered end of the second coupling part (2) projects an axially resilient sleeve (34) on which are formed the recesses (20) for the arresting means.

7. Clamping device according to one of the claims 1 or 3, characterized in that the ends of the transverse pin (16) are mounted in elastic bearing elements (31).

8. Clamping device according to one of the preceding claims, characterized in that the transverse pin (16) is made from elastic or resilient material.

9. Clamping device according to one of the preceding claims, characterized in that as a rotation preventing means a locking bolt (26) engaging in a locking opening (27) is fitted to one of the coupling parts (1, 2).

10. Clamping device according to one of the claims 1 to 8, characterized in that the rotation preventing means is constituted by an elastic shim (30) in the first coupling part (1), which with a clamping or friction surface presses against a frontal surface (29) of the second coupling part (2).

11. Clamping device according to one of the preceding claims, characterized in that on the first coupling part (1) is provided the receptacle (4) for a shank tool and that the second coupling part (2) has a threaded pin (12) or some other fastening element with which the second coupling part (2) can be fixed to a machine spindle or the like.

12. Clamping device according to one of the preceding claims, characterized in that the receptacle (4) has a stop (9), against which engages a shank end of the shank tool provide with an adjustable stop element (8).

## Revendications

1. Dispositif de serrage, avec une partie réceptrice (4) pour la queue (5) d'un outil à queue, et avec un dispositif d'accouplement, qui peut être fixé à une broche de machine-outil ou similaire, qui est constitué d'une première partie d'accouplement (1) à perçage axial conique (3) et d'une seconde partie d'accouplement (2) pouvant être insérée dans le perçage axial conique (3) et dotée d'une face d'enveloppe (11) de conicité correspondante, et qui possède un dispositif de blocage libérable, le dispositif de blocage bloquant mutuellement par adhérence les deux parties d'accouplement (1) afin de transmettre le couple de rotation, et la face d'enveloppe conique (11) de la seconde partie d'accouplement (2) étant pressée en permanence, au moyen de la force de ressort d'un élément d'arrêt (16) monté à élasticité axiale, contre le perçage axial conique (3) de la première partie d'accouplement (1), **caractérisé** en ce que, comme élément d'arrêt, une goupille transversale (16), qui traverse transversalement le perçage axial conique (3), s'engage par ses extrémités dans des trous oblongs (17) prévus sur la paroi du premier élément d'accouplement (1), et en ce que la goupille transversale (16) est axialement précontrainte, et l'autre partie d'accouplement (2) possède, dans la région de sa face d'enveloppe conique (11), des évidements (20) à la manière d'un emboîtement à baïonnette, dans lesquels s'engage élastiquement la goupille transversale (16).

2. Dispositif de serrage selon la revendication 1, **caractérisé** en ce que le dispositif de blocage possède un moyen d'assujettissement par engagement positif pour empêcher la rotation relative des deux parties d'accouplement (1, 2).

3. Dispositif de serrage selon l'une quelconque des revendications précédentes, **caractérisé** en ce que l'évidement (20) possède, comme moyen d'assujettissement pour empêcher la rotation, une indentation (22) orientée axialement et présentant un rayon correspondant au rayon de la goupille transversale (16).

4. Dispositif de serrage selon l'une quelconque des revendications précédentes, **caractérisé** en ce que la goupille transversale (16) est fixée à un goujon de support axialement mobile (15), dirigé vers l'intérieur du perçage axial conique (3), et en ce qu'un élément de ressort (14), qui s'appuie contre une butée (18) prévue dans la première partie d'accouplement (1), agit sur le goujon de support (15).

5. Dispositif de serrage selon la revendication 4, **caractérisé** en ce que l'élément de ressort (14) est un groupe de ressorts ou un élément de pression (25) réalisé en un matériau élastique.

6. Dispositif de serrage selon l'une quelconque des revendications précédentes, **caractérisé** en ce qu'une douille axialement élastique sur laquelle sont configurées des évidements (20) pour le blocage, dépasse à l'extrémité rétrécie de la seconde partie d'accouplement (2).

7. Dispositif de serrage selon la revendication 1 ou 3, **caractérisé** en ce que les extrémités de la goupille transversale (16) s'engagent dans des paliers élastiques (31).

8. Dispositif de serrage selon l'une quelconque des revendications précédentes, **caractérisé** en ce que la goupille transversale (16) est réalisé en matériau élastique ou de ressort.

9. Dispositif de serrage selon l'une quelconque des revendications précédentes, **caractérisé** en ce que, comme moyen d'assujettissement pour empêcher la rotation, une goupille d'arrêt (26), qui s'engage dans une ouverture d'arrêt (27), est prévue sur une des parties d'accouplement (1, 2).

10. Dispositif de serrage selon l'une quelconque des revendications 1 à 8, **caractérisé** en ce qu'il est prévu dans la première partie d'accouplement (1), comme moyen d'assujettissement pour empêcher la rotation, un élément de serrage élastique (30) qui est pressé, par une face de serrage ou de friction, contre une face frontale (29) de la seconde partie d'accouplement (2).

11. Dispositif de serrage selon l'une quelconque des revendications précédentes, **caractérisé** en ce que la partie réceptrice (4) pour un outil à queue est prévue sur la première partie d'accouplement (1), et en ce que la seconde partie d'accouplement (2) possède une tige filetée (12) ou autre élément de fixation par lequel la seconde partie d'accouplement (2) peut être fixée à une broche de machine-outil ou similaire.

12. Dispositif de serrage selon l'une quelconque des revendications précédentes, **caractérisé** en ce que la partie réceptrice (4) possède une butée (9) contre laquelle s'applique l'extrémité de la queue de l'outil à queue, laquelle est dotée d'un élément de butée réglable (8).
